# EUROPÄISCHE PATENTSCHRIFT

(11) **EP 2 358 564 B1**
(45) Veröffentlichungstag und Bekanntmachung des Hinweises auf die Patenterteilung: **05.09.2012**
(21) Anmeldenummer: 09799526.0
(22) Anmeldetag: 08.12.2009
(51) Int. Cl.: B60R 13/02, F16B 19/10, F16B 21/02, F16B 21/07, F16B 21/09

(54) **VORRICHTUNG ZUR BEFESTIGUNG EINER FAHRZEUGINNENVERKLEIDUNG**
DEVICE FOR FASTENING A VEHICLE INTERIOR TRIM PANEL
DISPOSITIF DE FIXATION D'UN HABILLAGE INTERIEUR DE VEHICULE

(30) Priorität: 11.12.2008 DE 102008061613
(43) Veröffentlichungstag der Anmeldung: 24.08.2011
(73) Patentinhaber: TRW Automotive Electronics & Components GmbH, 78315 Radolfzell (DE)
(72) Erfinder: MARX, Oliver, 67701 Schallodenbach (DE); SCHMIDT, Martin, 67806 Rockenhausen (DE)
(74) Vertreter: Prinz & Partner
(86) Internationale Anmeldenummer: PCT/EP2009/008763
(87) Internationale Veröffentlichungsnummer: WO 2010/066404

(56) Entgegenhaltungen:
- DE-A1-102006 013 507
- DE-A1-102006 057 890
- DE-U1-202008 006 958

## Beschreibung

Die Erfindung betrifft eine Vorrichtung zur Befestigung einer Fahrzeuginnenverkleidung an einem Verkleidungsträger gemäß dem Oberbegriff der Ansprüche 1 und 2 sowie ein verfahren zur Montage und Demontage einen Fahrzeug innenverkleidung an bzw. von einem Verkleidungsträger gemäß dem Oberbegriff des Auspruchs 13.

Heutzutage sind Kraftfahrzeugkarosserien einschließlich vorhandener Karosserieanbauteile aus optischen und technischen Gründen verkleidet. So umfassen Fahrzeugtüren beispielsweise einen Verkleidungsträger und eine innenseitige, d.h. dem Fahrzeuginnenraum zugewandte Türverkleidung, die am Verkleidungsträger befestigt ist. Der Verkleidungsträger und die Türverkleidung weisen gewöhnlich mehrere Rastelemente auf, die bei einer Montage der Türverkleidung so miteinander zusammenwirken, dass die Türverkleidung an den Verkleidungsträger angeclipst werden kann.

Wird senkrecht zur Türebene eine Achse definiert, so erfolgt die Montage der Türverkleidung in axialer Richtung. Da die Montage manuell durchgeführt wird, darf die Kraft zum Einclipsen der Rastelemente nicht zu groß sein. Gleichzeitig sollte die Rastverbindung jedoch sicherstellen, dass ein Aufnahmeraum für Türverriegelungselemente, Fensterheber, Lüftungsbauteile, Lautsprecher o.ä. zwischen der Türverkleidung und dem Verkleidungsträger gegen eindringendes Wasser sowie Staub geschützt ist. Darüber hinaus soll sich die Türverkleidung auch dann nicht vom Verkleidungsträger lösen, wenn ein Fahrzeuginsasse die Fahrzeugtür nicht in der üblichen Weise schließt, nämlich mithilfe des Türgriffs, sondern zum Beispiel ein in der Türverkleidung vorgesehenes Ablagefach zum Zuziehen der Fahrzeugtür verwendet.

Die Fahrzeuginnenverkleidung sollte darüber hinaus eine mehrmalige Montage und Demontage erlauben, um beispielsweise Wartungs- oder Reparaturarbeiten im Aufnahmeraum zwischen dem Verkleidungsträger und der Fahrzeuginnenverkleidung vornehmen zu können. Entgegen den oben genannten Anforderungen wäre hierfür eine Rastverbindung wünschenswert, die sich möglichst leicht lösen lässt.

Herkömmliche Rastverbindungen haben im übrigen das Problem, dass sich die Fahrzeuginnenverkleidung nach mehrmaliger Montage bzw. Demontage aufgrund der Abnutzung der Rastelemente nicht mehr so befestigen lässt, dass eine vorgegebene axiale Zugkraft an der Fahrzeuginnenverkleidung von den Rastelementen aufgenommen werden kann.

Es ist daher üblich, die Rastverbindung zwischen dem Verkleidungsträger und der Fahrzeuginnenverkleidung mittels einer Schraube zu sichern, was einen erhöhten Montage- und Demontageaufwand darstellt. Außerdem wird die Schraube durch die Fahrzeuginnenverkleidung in den Verkleidungsträger eingedreht und ist somit im Fahrzeuginnenraum sichtbar oder muss durch eine Abdeckung verdeckt werden.

In der gattungsbildenden DE 10 2006 013 507 A1 ist ein Konnektor zum Befestigen einer Verkleidungseinrichtung an einem Support eines Automobils beschrieben, der einen Konnektorkörper sowie eine abdichtende Dichtung umfasst. Der Konnektorkörper hat an einem proximalen Ende einen Kopfbereich angeformt, der konfiguriert ist zum operativen Verbinden mit der Verkleidungseinrichtung, und einen sich von dem Kopfbereich zu einem distalen Ende erstreckenden Schaftbereich, der konfiguriert ist zum operativen Verbinden mit dem Support. Die Dichtung ist distal zu dem Kopfbereich integral an dem Konnektorkörper geformt und dichtet zwischen dem Kopfbereich des Konnektorkörpers und der Verkleidungseinrichtung, sobald die Verkleidungseinrichtung mit dem Support gekoppelt ist.

Die DE 20 2008 006 958 U1 zeigt eine Verbindungsbaugruppe zur Befestigung eines Anbauelements auf einem Träger, mit einem Halteclip, der in eine Montageöffnung des Trägers einführbar ist und Haltemittel zur axialen Festlegung des Halteclips am Träger aufweist, einem Pin, der reversibel an einem am Anbauelement befestigten Koppelteil anbringbar und in den Halteclip einführbar ist, wobei die Abzugskraft des Pins in einer Zwischenposition der Verbindungsbaugruppe, in welcher der Pin eine erste Orientierung relativ zum Halteclip hat und nicht vollständig in den Halteclip eingeführt ist, größer ist als in einer Montageposition der Verbindungsbaugruppe, in welcher der Pin ebenfalls die erste Orientierung hat und vollständig in den Haltclip eingeführt ist.

Die Vorrichtung zur Anbringung eines Verkleidungsteils an einem Karosserieteil eines Kraftfahrzeugs gemäß der DE 10 2006 057 890 A1 umfasst ein Halteelement und ein für den Eingriff mit dem Halteelement vorgesehenes Befestigungselement. Das Halteelement weist zwei einander gegenüberliegende Hinterschneidungen zur Aufnahme jeweiliger, sich von einem zentralen Abschnitt des Befestigungselements nach außen erstreckender Vorsprünge des Befestigungselements auf. Außerdem hat das Halteelement an wenigstens einer seiner Seiten eine derartige Ausnehmung, dass das Befestigungselement durch die Ausnehmung in einer anderen Richtung aus dem Halteelement entnehmbar ist als entgegen der Befestigungsrichtung des Befestigungselements in dem Halteelement.

Aufgabe der Erfindung ist es, eine Befestigungsvorrichtung für eine Fahrzeuginnenverkleidung zu schaffen, die bei üblicher Beanspruchung einen hohen Widerstand gegen ein Lösen der Befestigung aufweist sowie gleichzeitig eine einfache Montage und Demontage der Fahrzeuginnenverkleidung ermöglicht.

Die Aufgabe wird erfindungsgemäß gelöst durch eine Befestigungsvorrichtung mit der Merkmalen der Ansprüche 1 oder 2. Infolge eines seitlich geöffneten Rastabschnitts besteht bei der Demontage der Fahrzeuginnenverkleidung die Möglichkeit, die Rastverbindung nicht parallel zur axialen Montage- und üblichen Beanspruchungsrichtung zu lösen, sondern seitlich, d.h. schräg dazu. Dementsprechend kann die Rastverbindung für eine höhere axiale Auszugkraft ausgelegt sein, da diese bei einer Demontage nicht mehr überwunden werden muss. Außerdem ist die Materialabnutzung am Rastabschnitt und am Halteelement bei einem derartigen Demontagevorgang so gering, dass auch bei mehrmaliger Montage bzw. Demontage der Fahrzeuginnenverkleidung ein nahezu unveränderter axialer Auszugwiderstand der Befestigungsvorrichtung erhalten bleibt.

In einer bevorzugten Ausführungsform ist das Halteelement im Rastabschnitt seitlich so verschiebbar, dass es seitlich, insbesondere in einer zur axialen Richtung radialen Richtung, aus dem Rastabschnitt austreten kann.

Die Erfindung umfasst auch ein Verfahren zur Montage und Demontage einer Fahrzeuginnenverkleidung an bzw. von einem Verkleidungsträger mit dem Merkmalen des Auspruchs 13. Dieses Verfahren ermöglicht eine Montage der Fahrzeuginnenverkleidung in axialer Richtung mittels wenigstens einer erfindungsgemäßen Befestigungsvorrichtung sowie gegebenenfalls weiterer herkömmlicher Befestigungsvorrichtungen. Die entstehende Rastverbindung der erfindungsgemäßen Befestigungsvorrichtung kann bei der Montage einen besonders hohen axialen Auszugwiderstand ausbilden, da die Rastverbindung bei der Demontage nicht in axialer Richtung, sondern durch eine Bewegung in seitlicher, vorzugsweise radialer Richtung gelöst wird. Eine separate Sicherungsschraube zur Erhöhung des axialen Auszugwiderstands ist dementsprechend nicht mehr nötig. Außerdem ist insbesondere die Demontage hinsichtlich der Materialabnutzung derart schonend, dass die Befestigungsvorrichtung auch nach mehrmaliger Montage und Demontage einen nahezu unveränderten axialen Auszugwiderstand aufweist und eine gute Abdichtung zwischen der Fahrzeuginnenverkleidung und dem Verkleidungsträger gegen Wasser und Staub gewährleistet.

Zweckmäßige Ausgestaltungen der Erfindung sowie deren Vorteile ergeben sich aus den Unteransprüchen.

Die Erfindung wird nachfolgend anhand einer bevorzugten Ausführungsform beschrieben, welche in den beigefügten Zeichnungen dargestellt ist. In diesen zeigt:
- Figur 1 die perspektivische Ansicht einer Fahrzeugtür;
- Figur 2 die perspektivische Explosionsansicht einer erfindungsgemäßen Vorrichtung zur Befestigung einer Fahrzeuginnenverkleidung an einem Verkleidungsträger,
- Figur 3 die perspektivische Ansicht eines Befestigungsteils für die erfindungsgemäße Befestigungsvorrichtung;
- Figur 4 Ansichten eines Halteelement der erfindungsgemäßen Befestigungsvorrichtung;
- Figur 5 Ansichten eines Aufnahmeelements der erfindungsgemäßen Befestigungsvorrichtung;
- Figur 6 die Vormontage des Aufnahmeelements gemäß Figur 5 an einem Verkleidungsträger;
- Figur 7 die Vormontage des Halteelements gemäß Figur 4 am Befestigungsteil gemäß Figur 3;
- Figur 8 die Montage und Demontage der erfindungsgemäßen Befestigungsvorrichtung; und
- Figur 9 die Demontage der Fahrzeuginnenverkleidung vom Verkleidungsträger.

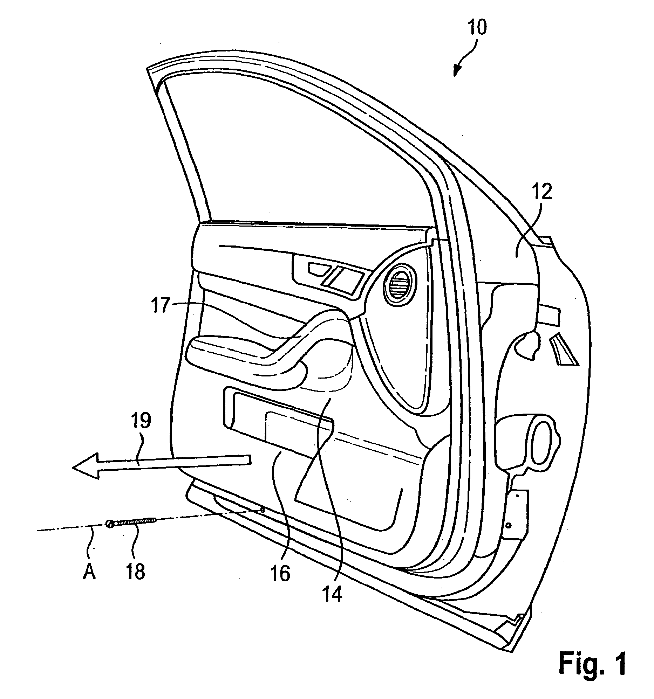

Die Figur 1 zeigt eine Fahrzeugtür 10 mit einem Verkleidungsträger 12 und einer Fahrzeuginnenverkleidung 14. Der Verkleidungsträger 12 ist in diesem Fall ein Türblech, ein Modulträger oder eine Versteifungsstrebe der Fahrzeugtür 10, kann jedoch alternativ auch ein zu verkleidendes Teil der Fahrzeugkarosserie sein. Die Fahrzeuginnenverkleidung 14 ist im Ausführungsbeispiel gemäß Figur 1 eine Türverkleidung 14, die unter anderem ein Ablagefach 16 zum Verstauen kleinerer Gegenstände wie Parkscheibe, Eiskratzer, Landkarten o.ä. aufweist. Da statt eines Türgriffs 17 der Fahrzeugtür 10 auch dieses Ablagefach 16 missbräuchlich zum Schließen der Tür verwendet werden kann (vgl. Pfeil 19), muss die Türverkleidung 14 zuverlässig am Verkleidungsträger 12 befestigt sein, damit sie sich beim Zuziehen der Fahrzeugtür 10 nicht vom Verkleidungsträger 12 löst.

Um eine derartige, unbeabsichtigte Demontage der Türverkleidung 14 zu verhindern, ist im Stand der Technik gewöhnlich eine Sicherungsschraube 18 vorgesehen, welche durch die Türverkleidung 14 in den Verkleidungsträger 12 eingedreht wird.

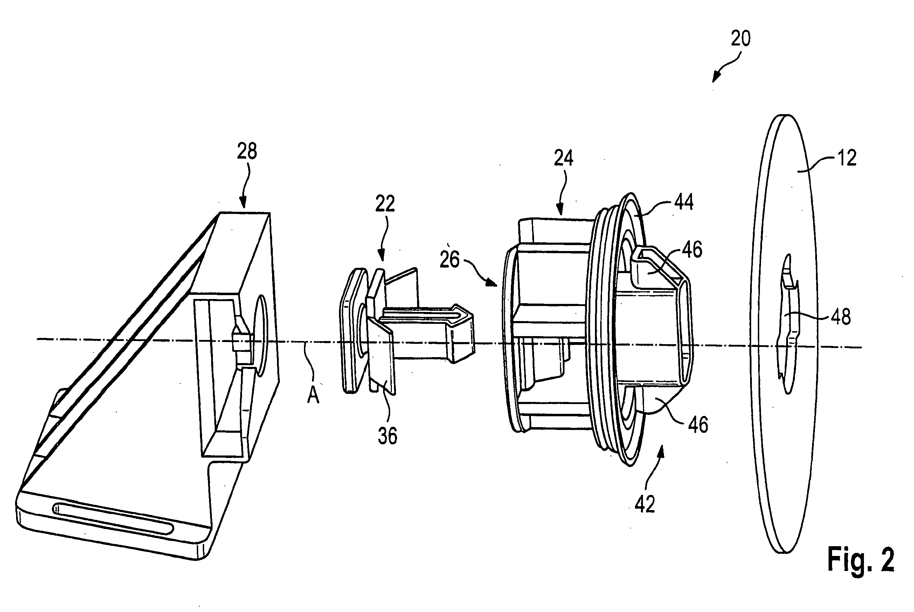

Die Figur 2 zeigt eine Vorrichtung 20 zur Befestigung der Türverkleidung 14 am Verkleidungsträger 12. Durch die Verwendung einer oder mehrerer dieser Befestigungsvorrichtungen 20 kann auf die optisch störende Sicherungsschraube 18 gemäß Figur 1 verzichtet werden. Die Befestigungsvorrichtung 20 wird dabei in der Regel ergänzend zu herkömmlichen Rastelementen (nicht gezeigt) verwendet, die über den Verkleidungsträger 12 und die Türverkleidung 14 verteilt sind, so dass die Türverkleidung 14 bei ihrer Montage einfach durch eine Bewegung in axialer Richtung A in den Verkleidungsträger 12 eingeclipst werden kann. Als axiale Richtung A wird in diesem Zusammenhang eine Richtung senkrecht zur Türebene bezeichnet, die in Figur 1 ungefähr einer Längsrichtung der Sicherungsschraube 18 entspricht. Die Befestigungsvorrichtung 20 wird vorzugsweise im Bereich hoher axialer Auszugskräfte am Rand der Türverkleidung 14, d.h. insbesondere im Bereich der Sicherungsschraube 18 eingesetzt (vgl. Figur 1).

Gemäß Figur 2 umfasst die Befestigungsvorrichtung 20 ein Halteelement 22 und ein Aufnahmeelement 24, wobei das Aufnahmeelement 24 einen Rastabschnitt 26 aufweist, in den das Halteelement 22 so eingreifen kann, dass es am Aufnahmeelement 24 in axialer Richtung befestigt ist. Neben dem Halteelement 22 und dem Aufnahmeelement 24 ist in Figur 2 noch ein Ausschnitt des Verkleidungsträgers 12 zu sehen, sowie ein Befestigungsteil 28, das zur Befestigung des Halteelements 22 an der Türverkleidung 14 dient.

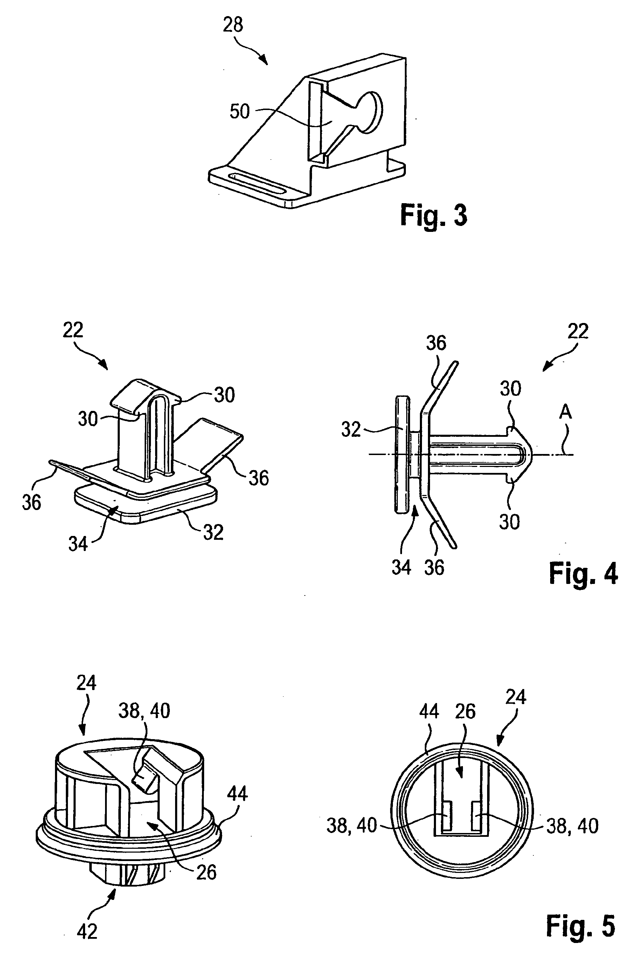

Auf Einzelheiten der genannten Bauteile wird nun im Folgenden anhand der Figuren 3 bis 5 genauer eingegangen.

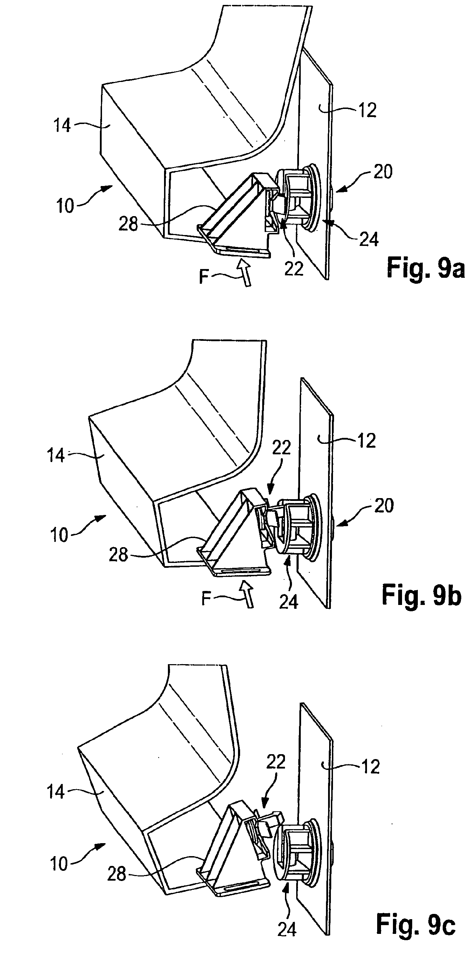

Die Figur 3 zeigt das Befestigungsteil 28 zur Fixierung des Halteelements 22 an der Türverkleidung 14 (vgl. auch Figur 9), wobei das Befestigungsteil 28 in einer besonderen Ausführungsvariante unmittelbar in die Türverkleidung 14 integriert ist.

In Figur 4 ist links eine perspektivische Ansicht und rechts eine Seitenansicht des Halteelements 22 dargestellt. Das Halteelement 22 ist insgesamt stiftförmig ausgebildet und weist an einem axialen Ende zwei Rastnasen 30 auf. Am entgegengesetzten axialen Ende weist das Halteelement 22 einen rechteckigen Stiftkopf 32 auf, der zur Befestigung des Halteelements 22 am Befestigungsteil 28 dient. Lediglich durch einen kurzen Halsabschnitt 34 vom Stiftkopf 32 getrennt, sind am Halteelement 22 zwei elastische Flügel 36 vorgesehen, deren freie Enden sich im montierten Zustand der Befestigungsvorrichtung 20 am Aufnahmeelement 24 abstützen. Die Befestigungsvorrichtung 20 wird mittels dieser Flügel 36 elastisch vorgespannt, sodass später im Fahrzeugbetrieb keine Klappergeräusche auftreten können.

Die Figur 5 zeigt links eine perspektivische Ansicht und rechts eine Draufsicht des Aufnahmeelements 24. Der Rastabschnitt 26 des Aufnahmeelements 24 weist einen Hinterschnitt 38 auf, an dem das Halteelement 22, genauer eine Rastnase 30 des Halteelements 22, angreifen kann. Im dargestellten Ausführungsbeispiel sind sogar zwei symmetrisch angeordnete Hinterschnitte 38 vorgesehen (Figur 5, rechts), die jeweils durch einen schräg gestellten Rastvorsprung 40 gebildet sind. Die Rastvorsprünge 40 sind dabei elastisch ausgeführt, sodass sie bei einer axialen Montage der Türverkleidung 14 vom Halteelement 22 auseinandergedrückt werden und hinter den Rastnasen 30 in ihre Ausgangsposition zurückschnappen. Der axiale Auszugwiderstand zwischen dem Halteelement 22 und dem Aufnahmeelement 24 wird somit im Wesentlichen durch die Formgebung der Rastnasen 30 und der Rastvorsprünge 40 bestimmt.

In Figur 5 ist außerdem gut zu erkennen, dass der Rastabschnitt 26 seitlich, d.h. quer zur Achse A, insbesondere radial zur Achse A (vgl. auch Figuren 2 und 4), geöffnet ist. Für eine Demontage der Türverkleidung 14, d.h. ein Lösen des Halteelements 22 vom Aufnahmeelement 24, ist nach dem Zurückschnappen der Rastvorsprünge 40 keine erneute Verformung der Rastvorsprünge 40 notwendig. Das Halteelement 22 ist im Rastabschnitt 26 seitlich so verschiebbar, dass es seitlich, insbesondere in einer zur axialen Richtung radialen Richtung aus dem Rastabschnitt austreten kann. Gemäß Figur 5 rechts wird das Halteelement 22 relativ zum Aufnahmeelement 24 radial nach oben verschoben, bis die Rastnasen 30 nicht mehr an den Rastvorsprüngen 40 angreifen.

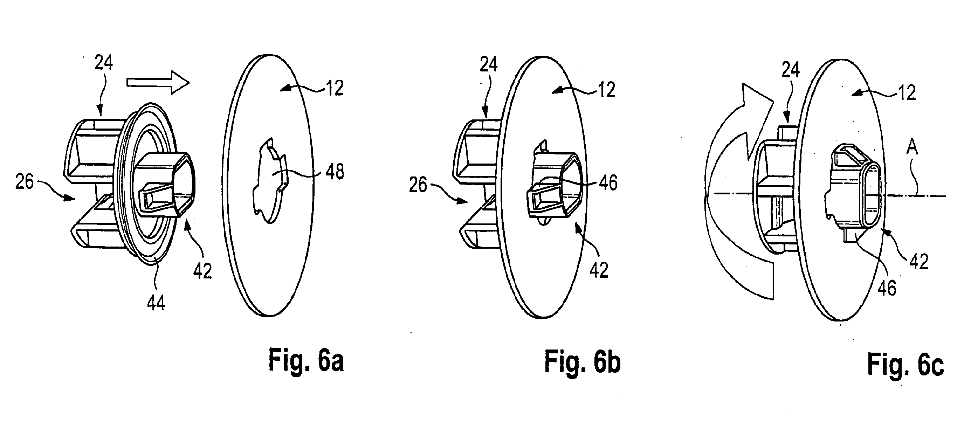

Das Aufnahmeelement 24 ist bevorzugt am Verkleidungsträger 12 vormontiert. Ein Ablaufschema zur Vormontage des Aufnahmeelements 24 ist in Figur 6 zu sehen. Das Aufnahmeelement 24 umfasst einen Verankerungsabschnitt 42 mit dem es fahrzeugfest am Verkleidungsträger 12 montiert werden kann. Außerdem ist das Aufnahmeelement 24 mit einer Dichtung 44 versehen, um einen Aufnahmeraum in der Fahrzeugtür 10 zwischen dem Verkleidungsträger 12 und der Türverkleidung 14 gegenüber einer Fahrzeugumgebung abzudichten.

Zur Vormontage des Aufnahmeelements 24 am Verkleidungsträger 12 wird der Verankerungsabschnitt 42, genauer gesagt zwei einander gegenüberliegende Verankerungsvorsprünge 46 des Verankerungsabschnitts 42, in axialer Richtung durch eine Öffnung 48 im Verkleidungsträger 12 geschoben (vgl. Figur 6a). Der Verankerungsabschnitt 42 ist dabei so ausgebildet, dass die Verankerungsvorsprünge 46 unter axialer Verformung der Dichtung 44 komplett durch die Öffnung 48 hindurchtreten (Figur 6b). In dieser Position kann das Aufnahmeelement 24 relativ zum Verkleidungsträger 12 um die Achse A verdreht werden. Gemäß Figur 6c wurde das Aufnahmeelement 24 um etwa 90° verdreht. Die Öffnung 48 im Verkleidungsträger 12 weist dabei einen Querschnitt auf, der nach dieser Verdrehung keine axiale Bewegung des Aufnahmeelements 24 entgegen seiner Montagerichtung erlaubt. Durch die elastische Verformung der Dichtung 44 sind der Verkleidungsträger 12 und das Aufnahmeelement 24 axial gegeneinander vorgespannt und in axialer sowie radialer Richtung miteinander verbunden. Mit anderen Worten ist das Aufnahmeelement 24 mittels einer Bajonett-Verbindung am Verkleidungsträger 12 der Fahrzeugtür 10 befestigt. Selbstverständlich kann diese Bajonett-Verbindung in ihrer Endposition gemäß Figur 6c einen Drehanschlag oder ein schwaches Rastmittel aufweisen, um die Endposition genau zu definieren.

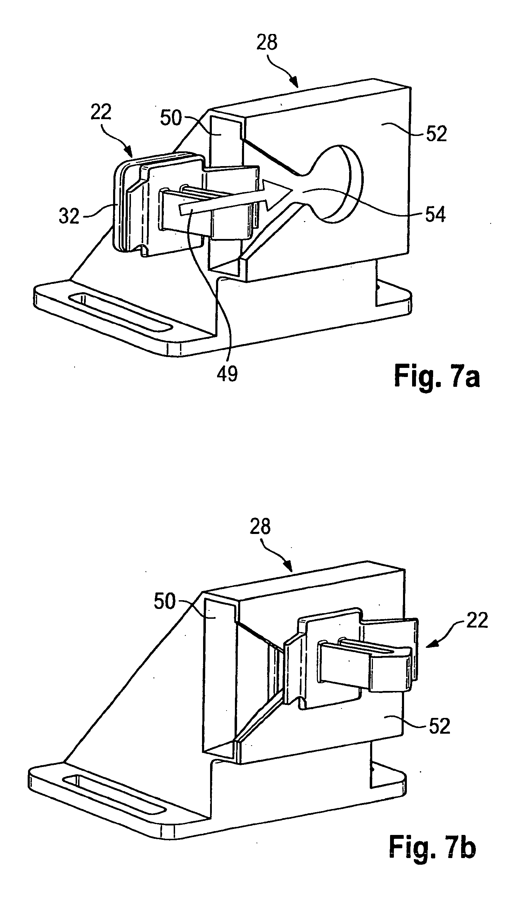

Vor seiner Montage am Aufnahmeelement 24 wird auch das Halteelement 22 vormontiert, und zwar mittels einer Schiebe-Rast-Verbindung am Befestigungsteil 28, welches wiederum an der Türverkleidung 14 angebracht ist. Gemäß Figur 7a wird das Halteelement 22 hierzu radial auf das Befestigungsteil 28 geschoben (Pfeil 49), wodurch der Stiftkopf 32 des Halteelements 22 in einer rechteckigen Aufnahmetasche 50 aufgenommen wird, welche eine Stirnwand 52 mit einem schlüssellochförmigen Schlitz 54 aufweist. Vorzugsweise ist eine Schlitzbreite an der engsten Stelle geringfügig kleiner als eine Abmessung des Halsabschnitts 34, sodass das Halteelement 22 in seine Endstellung gemäß Figur 7b einschnappt und relativ zum Befestigungsteil 28 unverlierbar fixiert ist. Obwohl die Größenverhältnisse in den Figuren 7a und 7b etwas verzerrt dargestellt sind, entsprechen die Innenabmessungen der Aufnahmetasche 50 etwa den Abmessungen des Stiftkopfs 32, sodass keine Relativdrehung um die Achse A möglich ist. Das Halteelement 22 ist bezüglich der Achse A drehfest mit dem Befestigungsteil 28 verbunden.

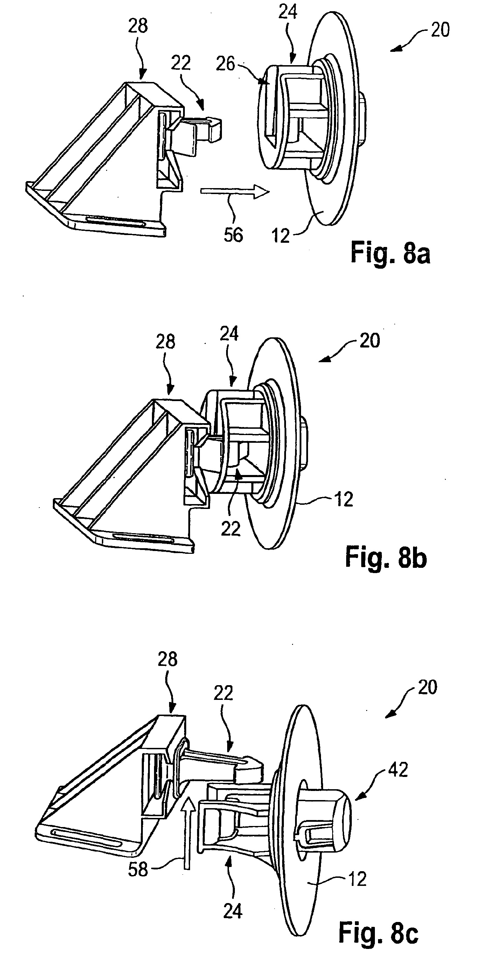

Nach der Vormontage des Aufnahmeelements 24 am Verkleidungsträger 12 sowie des Halteelements 22 am Befestigungsteil 28 bzw. an der Türverkleidung 14 kann die Türverkleidung 14 nun am Verkleidungsträger 12 montiert werden. Gemäß Figur 8a wird hierzu lediglich die Türverkleidung 14 bzw. das starr mit der Türverkleidung 14 verbundene Befestigungsteil 28 in axialer Richtung (Pfeil 56) zum Verkleidungsträger 12 hin bewegt. Das Halteelement 22 der Befestigungsvorrichtung 20 rastet dabei unter Verformung der Rastvorsprünge 40 sowie der elastischen Flügel 36 im Rastabschnitt 26 des Aufnahmeelements 24 ein, so dass die Montage im wesentlichen einer herkömmlichen Montage der Türverkleidung 14 mit herkömmlichen Rastelementen entspricht. Diese montierte Verrastungsstellung ist in Figur 8b zu sehen.

Im Gegensatz zu herkömmlichen Demontageverfahren wird diese Rastverbindung bei einer Demontage der Türverkleidung 14 nicht durch axialen Zug entgegen der Montagerichtung gelöst, sondern durch eine seitliche, insbesondere etwa radiale Verschiebung des Halteelements 22 relativ zum Aufnahmeelement 24 (Pfeil 58). Da der Rastabschnitt 26 im Aufnahmeelement 24 seitlich geöffnet ist, kann das Halteelement 22 seitlich aus dem Aufnahmeelement 24 austreten, wodurch die Rastverbindung zwischen Halteelement 22 und Aufnahmeelement 24 gelöst ist (vgl. Figur 8c).

Der Demontagevorgang wird anhand der Figuren 9a bis 9c am Beispiel der Fahrzeugtür 10 gemäß Figur 1 nochmals genauer erläutert. Anstelle der Sicherungsschraube 18, jedoch etwa in deren Bereich, ist die Befestigungsvorrichtung 20 vorgesehen. Die Figuren 9a bis 9c zeigen einen schematischen Querschnitt durch die Fahrzeugtür 10 und diese Befestigungsvorrichtung 20.

Gemäß Figur 9a befindet sich die Türverkleidung 14 relativ zum Verkleidungsträger 12 in ihrer montierten Stellung, in der sie einen hohen axialen Auszugwiderstand aufweist. Das Befestigungsteil 28 ist am Rand der Türverkleidung 14 starr mit der Türverkleidung 14 verbunden oder sogar in die Türverkleidung 14 integriert.

Soll nun die Türverkleidung 14 vom Verkleidungsträger 12 demontiert werden, so ist im Bereich des Befestigungsteils 28 eine etwa radial ausgerichtete Kraft F aufzubringen.

Durch diese Kraft F wird die Türverkleidung 14 randseitig elastisch verformt (Figur 9b). Infolge dieser Verformung führen das Befestigungsteil 28 und das daran befestigte Halteelement 22 eine Bewegung in etwa radialer Richtung aus, sodass das Halteelement 22 seitlich aus dem Rastabschnitt 26 des Aufnahmeelements 24 austreten kann (Figur 9c).

Nach dem Lösen der Rastverbindung(en) der Befestigungsvorrichtung(en) 20 wird die Türverkleidung 14 in axialer Richtung vom Verkleidungsträger 12 wegbewegt, wodurch sich gegebenenfalls weitere Rastverbindungen mit herkömmlichen Rastelementen lösen. Die herkömmlichen Rastelemente bilden nämlich bei der axialen Montagebewegung eine Rastverbindung aus, welche bei einer entgegengesetzten axialen Demontagebewegung wieder gelöst wird.

Die Befestigungsvorrichtung 20 ermöglicht also insgesamt eine Befestigung der Türverkleidung 14 am Verkleidungsträger 12, wobei diese Befestigung besonders dicht gegenüber Waser und Staub ist, einen hohen Auszugswiderstand aufweist und darüber hinaus eine mehrmalige Montage und Demontage bei etwa gleichbleibender Verbindungsqualität erlaubt. Darüber hinaus gestaltet sich bei Verwendung der Befestigungsvorrichtung 20 auch das Verfahren zur Montage und Demontage der Türverkleidung 14 besonders einfach.

## Patentansprüche

1. Vorrichtung zur Befestigung einer Fahrzeuginnenverkleidung (14) an einem Verkleidungsträger (12), mit
einem Halteelement (22) und
einem Aufnahmeelement (24),
wobei das Aufnahmeelement (24) einen Rastabschnitt (26) aufweist, in den das Halteelement (22) so eingreifen kann, dass es am Aufnahmeelement (24) in einer axialen Richtung befestigt ist, und
wobei der Rastabschnitt (26) seitlich geöffnet ist,
**dadurch gekennzeichnet, dass** das Halteelement (22) mit zwei gegenüberliegenden elastischen Flügeln (36) versehen ist, welche die Befestigungsvorrichtung (20) in axialer Richtung elastisch vorspannen, wobei sich die freien Enden der Flügel (36) in einem montierten Zustand der Befestigungsvorrichtung (20) am Aufnahmeelement (24) abstützen.

2. Vorrichtung zur Befestigung einer Fahrzeuginnenverkleidung (14) an einem Verkleidungsträger (12), mit
einem Halteelement (22) und
einem Aufnahmeelement (24),
wobei das Aufnahmeelement (24) einen Rastabschnitt (26) aufweist, in den das Halteelement (22) so eingreifen kann, dass es am Aufnahmeelement (24) in einer axialen Richtung befestigt ist, und
wobei der Rastabschnitt (26) seitlich geöffnet ist,
**dadurch gekennzeichnet, dass** das Aufnahmeelement (24) auf einer dem Verkleidungsträger (12) zugewandten Seite mit einer Dichtung (44) versehen ist, die nach einer Vormontage des Aufnahmeelements (24) am Verkleidungsträger (12) axial verformt ist und das Aufnahmeelement (24) gegen den Verkleidungsträger (12) vorspannt.

3. Vorrichtung nach Anspruch 1 oder 2, **dadurch gekennzeichnet, dass** das Halteelement (22) im Rastabschnitt (26) seitlich verschiebbar ist, so dass es seitlich, insbesondere in einer zur axialen Richtung radialen Richtung, aus dem Rastabschnitt (26) austreten kann.

4. Vorrichtung nach einem der vorhergehenden Ansprüche, **dadurch gekennzeichnet, dass** der Rastabschnitt (26) einen Hinterschnitt (38) aufweist, an dem das Halteelement (22) angreifen kann.

5. Vorrichtung nach Anspruch 4, **dadurch gekennzeichnet, dass** der Hinterschnitt (38) durch einen schräg gestellten Rastvorsprung (40) gebildet ist.

6. Vorrichtung nach Anspruch 4 oder 5, **dadurch gekennzeichnet, dass** der Rastabschnitt (26) zwei symmetrisch angeordnete Hinterschnitte (38) aufweist.

7. Vorrichtung nach einem der vorhergehenden Ansprüche, **dadurch gekennzeichnet, dass** das Halteelement (22) stiftförmig mit mindestens einer Rastnase (30) ausgebildet ist.

8. Vorrichtung nach einem der vorhergehenden Ansprüche, **dadurch gekennzeichnet, dass** das Aufnahmeelement (24) mit einem Verankerungsabschnitt (42) versehen ist, mit dem es fahrzeugfest montiert werden kann.

9. Vorrichtung nach Anspruch 8, **dadurch gekennzeichnet, dass** der Verankerungsabschnitt (42) zwei einander gegenüberliegende Verankerungsvorsprünge (46) aufweist.

10. Vorrichtung nach einem der vorhergehenden Ansprüche, **dadurch gekennzeichnet, dass** ein Befestigungsteil (28) vorgesehen ist, das zur Befestigung des Halteelements (22) an der Fahrzeuginnenverkleidung (14) dient.

11. Vorrichtung nach Anspruch 10, **dadurch gekennzeichnet, dass** das Befestigungsteil (28) in die Fahrzeuginnenverkleidung (14) integriert ist.

12. Vorrichtung nach Anspruch 10 oder 11, **dadurch gekennzeichnet, dass** das Halteelement (22) und das Befestigungsteil (28) mittels einer Schiebe-RastVerbindung aneinander befestigt sind.

13. Verfahren zur Montage und Demontage einer Fahrzeuginnenverkleidung (14) an bzw. von einem Verkleidungsträger (12) mittels einer Vorrichtung (20), die ein der Fahrzeuginnenverkleidung (14) zugeordnetes Halteelement (22) und ein dem Verkleidungsträger (12) zugeordnetes Aufnahmeelement (24) aufweist, wobei das Haltelement (22) bei der Montage in einer axialen Richtung in das Aufnahmeelement (24) eingedrückt wird, wobei das Haltelement (22) bei der Demontage in einer zur axialen Richtung seitlichen Richtung verschoben wird, wodurch es vom Aufnahmeelement (24) freikommt,
**dadurch gekennzeichnet, dass** die Fahrzeuginnenverkleidung (14) bei ihrer Demontage an einer vordefinierten Stelle im Bereich des Halteelements (22) so verformt wird, dass das Halteelement (22) vom Aufnahmeelement (24) freikommt.

14. Verfahren nach Anspruch 13, **dadurch gekennzeichnet, dass** das Halteelement (22) bei der Montage in einem Rastabschnitt (26) des Aufnahmeelements (24) einrastet.

15. Verfahren nach Anspruch 13 oder 14, **dadurch gekennzeichnet, dass** das Aufnahmeelement (24) vor einer Montage des Halteelements (22) am Aufnahmeelement (24) mittels einer Bajonett-Verbindung am Verkleidungsträger (12) angebracht wird.

16. Verfahren nach einem der Ansprüche 13 bis 15, **dadurch gekennzeichnet, dass** das Halteelement (22) vor seiner Montage am Aufnahmeelement (24) mittels einer Schiebe-Rast-Verbindung an einem Befestigungsteil (28) montiert wird, das an der Fahrzeuginnenverkleidung (14) angebracht ist.

## Claims

1. A device for fastening a vehicle inner lining (14) to a lining support (12), comprising
a holding element (22) and
a receiving element (24),
the receiving element (24) including a latching portion (26) into which the holding element (22) can engage such that it is fastened to the receiving element (24) in an axial direction, and
the latching portion (26) being open laterally,
**characterized in that** the holding element (22) is provided with two oppositely located elastic wings (36) which elastically prestress the fastening device (20) in the axial direction, the free ends of the wings (36) resting against the receiving element (24) in a mounted state of the fastening device (20).

2. A device for fastening a vehicle inner lining (14) to a lining support (12), comprising
a holding element (22) and
a receiving element (24),
the receiving element (24) including a latching portion (26) into which the holding element (22) can engage such that it is fastened to the receiving element (24) in an axial direction, and
the latching portion (26) being open laterally,
**characterized in that** on a side facing the lining support (12), the receiving element (24) is provided with a seal (44) which is axially deformed after a premounting of the receiving element (24) to the lining support (12) and prestresses the receiving element (24) against the lining support (12).

3. The device according to claim 1 or 2, **characterized in that** the holding element (22) can be shifted laterally in the latching portion (26) so that it can move laterally out of the latching portion (26), in particular in a radial direction with respect to the axial direction.

4. The device according to any of the preceding claims, **characterized in that** the latching portion (26) has an undercut (38) which can be engaged by the holding element (22).

5. The device according to claim 4, **characterized in that** the undercut (38) is formed by an obliquely positioned latching projection (40).

6. The device according to claim 4 or 5, **characterized in that** the latching portion (26) has two symmetrically arranged undercuts (38).

7. The device according to any of the preceding claims, **characterized in that** the holding element (22) is formed so as to have the shape of a pin and has at least one latching nose (30).

8. The device according to any of the preceding claims, **characterized in that** the receiving element (24) is provided with an anchoring portion (42) by means of which it can be mounted in a vehicle-fixed manner.

9. The device according to claim 8, **characterized in that** the anchoring portion (42) has two anchoring projections (46) located opposite each other.

10. The device according to any of the preceding claims, **characterized in that** a fastening part (28) is provided which serves to fasten the holding element (22) to the vehicle inner lining (14).

11. The device according to claim 10, **characterized in that** the fastening part (28) is integrated in the vehicle inner lining (14).

12. The device according to claim 10 or 11, **characterized in that** the holding element (22) and the fastening part (28) are fastened to each other by means of a sliding-latching connection.

13. A method of mounting and demounting a vehicle inner lining (14) to or from a lining support (12) by means of a device (20) including a holding element (22) associated with the vehicle inner lining (14) and a receiving element (24) associated with the lining support (12), the holding element (22) being pressed into the receiving element (24) in an axial direction during mounting, the holding element (22) being shifted in a lateral direction with respect to the axial direction during demounting, whereby it is detached from the receiving element (24),
**characterized in that** when it is demounted, the vehicle inner lining (14) is deformed at a predefined point in the region of the holding element (22) such that the holding element (22) is detached from the receiving element (24).

14. The method according to claim 13, **characterized in that** during mounting, the holding element (22) latches into a latching portion (26) of the receiving element (24).

15. The method according to claim 13 or 14, **characterized in that** the receiving element (24) is attached to the lining support (12) by means of a bayonet connection before the holding element (22) is mounted to the receiving element (24).

16. The method according to any of claims 13 to 15, **characterized in that** before the holding element (22) is mounted to the receiving element (24), it is mounted to a fastening part (28) by means of a sliding-latching connection, the fastening part being attached to the vehicle inner lining (14).

## Revendications

1. Dispositif de fixation d'un revêtement intérieur (14) de véhicule sur un support (12) de revêtement, comportant
un élément de retenue (22) et
un élément de réception (24),
l'élément de réception (24) présentant un tronçon d'enclenchement (26) dans lequel l'élément de retenue (22) peut s'engager de manière à être fixé sur l'élément de réception (24) dans un sens axial, et
le tronçon d'enclenchement (26) étant ouvert latéralement,
**caractérisé en ce que** l'élément de retenue (22) est pourvu de deux ailes élastiques (36) opposées qui précontraignent le dispositif de fixation (20) de manière élastique dans le sens axial, les extrémités libres des ailes (36) prenant appui sur l'élément de réception (24) dans un état monté du dispositif de fixation (20).

2. Dispositif de fixation d'un revêtement intérieur (14) de véhicule sur un support (12) de revêtement, comportant
un élément de retenue (22) et
un élément de réception (24),
l'élément de réception (24) présentant un tronçon d'enclenchement (26) dans lequel l'élément de retenue (22) peut s'engager de manière à être fixé sur l'élément de réception (24) dans un sens axial, et
le tronçon d'enclenchement (26) étant ouvert latéralement,
**caractérisé en ce que** sur une face tournée vers le support (12) de revêtement, l'élément de réception (24) est pourvu d'un joint d'étanchéité (44) qui après un prémontage de l'élément de réception (24) sur le support (12) de revêtement est axialement déformé et précontraint l'élément de réception (24) contre le support (12) de revêtement.

3. Dispositif selon la revendication 1 ou 2, **caractérisé en ce que** l'élément de retenue (22) est latéralement déplaçable dans le tronçon d'enclenchement (26) de manière à pouvoir sortir hors du tronçon d'enclenchement (26) de façon latérale, en particulier dans un sens radial par rapport au sens axial.

4. Dispositif selon l'une des revendications précédentes, **caractérisé en ce que** le tronçon d'enclenchement (26) présente une contre-dépouille (38) sur laquelle l'élément de retenue (22) peut s'engager.

5. Dispositif selon la revendication 4, **caractérisé en ce que** la contre-dépouille (38) est formée par une saillie d'enclenchement (40) inclinée.

6. Dispositif selon la revendication 4 ou 5, **caractérisé en ce que** le tronçon d'enclenchement (26) présente deux contre-dépouilles (38) agencées de manière symétrique.

7. Dispositif selon l'une des revendications précédentes, **caractérisé en ce que** l'élément de retenue (22) est réalisé en forme de goupille qui présente au moins un ergot d'enclenchement (30).

8. Dispositif selon l'une des revendications précédentes, **caractérisé en ce que** l'élément de réception (24) est pourvu d'un tronçon d'ancrage (42) au moyen duquel il peut être monté solidaire au véhicule.

9. Dispositif selon la revendication 8, **caractérisé en ce que** le tronçon d'ancrage (42) présente deux saillies d'ancrage (46) opposées l'une à l'autre.

10. Dispositif selon l'une des revendications précédentes, **caractérisé en ce qu'**il est prévu une pièce de fixation (28) qui sert à la fixation de l'élément de retenue (22) sur le revêtement intérieur (14) de véhicule.

11. Dispositif selon la revendication 10, **caractérisé en ce que** la pièce de fixation (28) est intégrée dans le revêtement intérieur (14) de véhicule.

12. Dispositif selon la revendication 10 ou 11, **caractérisé en ce que** l'élément de retenue (22) et la pièce de fixation (28) sont fixés l'un à l'autre au moyen d'une liaison à coulissement et encliquetage.

13. Procédé de montage et de démontage d'un revêtement intérieur (14) de véhicule à un ou d'un support (12) de revêtement au moyen d'un dispositif (20) qui comporte un élément de retenue (22) associé au revêtement intérieur (14) de véhicule et un élément de réception (24) associé au support (12) de revêtement, l'élément de retenue (22) étant pressé dans un sens axial dans l'élément de réception (24) lors du montage, l'élément de retenue (22) étant déplacé dans un sens latéral par rapport au sens axial lors du démontage, grâce à quoi il se libère de l'élément de réception (24),
**caractérisé en ce que** lors de son démontage, le revêtement intérieur (14) de véhicule est déformé à un endroit prédéfini dans la zone de l'élément de retenue (22) de telle sorte que l'élément de retenue (22) se libère de l'élément de réception (24).

14. Procédé selon la revendication 13, **caractérisé en ce que** lors du montage, l'élément de retenue (22) s'enclenche dans un tronçon d'enclenchement (26) de l'élément de réception (24).

15. Procédé selon la revendication 13 ou 14, **caractérisé en ce qu'**avant un montage de l'élément de retenue (22) sur l'élément de réception (24), l'élément de réception (24) est agencé sur le support (12) de revêtement au moyen d'une liaison par baïonnette.

16. Procédé selon l'une des revendications 13 à 15, **caractérisé en ce qu'**avant son montage sur l'élément de réception (24), l'élément de retenue (22) est monté sur une pièce de fixation (28) au moyen d'une liaison à coulissement et encliquetage, laquelle est monté sur le revêtement intérieur (14) de véhicule.
